# EUROPÄISCHE PATENTANMELDUNG

(11) **EP 2 147 623 A1**
(43) Veröffentlichungstag der Anmeldung: **27.01.2010**
(21) Anmeldenummer: 09009155.4
(22) Anmeldetag: 14.07.2009
(51) Int. Cl.: A47J 42/46, F16D 7/04

(54) **Überlastkupplung**

(30) Priorität: 23.07.2008 DE 202008010085 U
(71) Anmelder: Eugster/Frismag AG, 8580 Amriswil (CH)
(72) Erfinder: Mahlich, Gotthard, 61476 Kronberg (DE)
(74) Vertreter: Schubert, Siegmar

(57) **Zusammenfassung**

Zum Antrieb einer Mahlwerkskaffeemühle als Arbeitseinheit ist eine Überlastkupplung zur Begrenzung eines übertragenen Drehmoments mit zwei Kupplungskörpern (1, 2) vorgesehen, deren Mittelachsen miteinander fluchten. Ein erster der beiden Kupplungskörper (1, 2) ist als antriebsseitiger Kupplungskörper (1) über eine angetriebene Welle (5) mit einem Antriebsaggregat verbunden. Ein zweiter der beiden Kupplungskörper (1, 2) steht als abtriebsseitiger Kupplungskörper (2) mit der Arbeitseinheit in kraftschlüssiger Verbindung. Ein Federelement (8) greift an einem der beiden Kupplungskörper (1, 2) an, um eine lösbare kraftschlüssige Verbindung zwischen dem antriebsseitigen Kupplungskörper (1) und dem abtriebsseitigen Kupplungskörper (2) herzustellen. Die beiden Kupplungskörper (1, 2) sind scheibenförmig. In einander zugewandte Stirnseiten sind zueinander komplementäre wellenförmige Ausnehmungen (4a, 4b) und Erhebungen (3a, 3b, 3c) ausgeformt. Einer der beiden Kupplungskörper (1, 2) ist mittels des Federelements (8) auf den anderen der beiden Kupplungskörper axial verschiebbar, so dass die wellenförmigen Ausnehmungen (4a, 4b) und Erhebungen (3a, 3b, 3c) in den einander zugewandten Stirnseiten der beiden Kupplungskörper (1, 2) kraft- und formschlüssig ineinandergreifen. Für Verschleißarmut im Betrieb der Überlastkupplung ist eine Schaltvorrichtung geeignet, eine Drehung der angetriebenen Welle (5) zu stoppen. Sie wird mittels eines Betätigungselements (11) durch Verschieben des axial verschiebbaren Kupplungskörpers betätigt, wenn bei Überschreiten eines vorgegebenen maximalen zu übertragenden Drehmoments der axial verschiebbare Kupplungskörper (1) entgegen der Federbelastung (5) selbsttätig verschoben wird.

## Beschreibung

Die Erfindung betrifft eine Überlastkupplung nach dem Oberbegriff des Anspruchs 1, die insbesondere zum Einsatz in einer Mahlwerkskaffeemühle vorgesehen ist.

Generell werden zum Antrieb von Mahlwerkskaffeemühlen Antriebssysteme verwendet, in denen zwischen einem elektrischen Antriebsmotor und einem Mahlwerk eine Überlast- oder Drehmomentenkupplung angeordnet ist. Eine solche Kupplung ist erforderlich, um bei einer Blockierung des Mahlwerkes, die insbesondere durch nichtmahlfähige Fremdkörper im Mahlgut verursacht werden, eine Zerstörung des Mahlwerkes oder des Antriebsmotors oder anderer Teile des Antriebssystems zu vermeiden, die antriebstechnisch zwischen dem Antriebsmotor und dem Mahlwerk angeordnet sind.

Zum gattungsgemäßen Stand der Technik, der aus der Praxis bekannt ist, gehören Überlastkupplungen, bei denen ein mit dem Antriebsmotor bzw. Antriebsaggregat kraftschlüssig verbundener antriebsseitiger Kupplungskörper in einem topfartigen, mit dem anzutreibenden Mahlwerk verbundenen abtriebsseitigen Kupplungskörper angeordnet ist. Der antriebsseitige Kupplungskörper ist mit radial angeordneten Kammern ausgestattet, in denen federbelastete Kugeln nach außen in Einbuchtungen gedrückt werden, die an einer inneren Umfangswand des abtriebsseitigen Kupplungskörpers ausgebildet sind, und zwar so, dass die Kugeln hälftig in den Kammern in dem abtriebsseitigen Kupplungsteil und hälftig in den Kammern des antriebsseitigen Kupplungsteils hineinragen.

Durch die damit erzielte kraft- und formschlüssige Verbindung zwischen dem antriebsseitigen Kupplungskörper und dem abtriebsseitigen Kupplungskörper wird normalerweise der abtriebsseitige Kupplungskörper mit gleicher Drehzahl wie der antriebsseitige Kupplungsteil in Drehung versetzt. Bei einer Überlastung oder Blockierung des Mahlwerkes werden die Kugeln von Flanken der Einbuchtungen gegen die Federkraft in ihre Kammern eingedrückt und die kraftschlüssige Verbindung zwischen beiden Kupplungskörpern wird im wesentlichen aufgehoben. - Nachteilig sind bei diesen bekannten Überlastkupplungen eine teilweise umständliche Montage bei der Herstellung, da die Federn in den Kammern das Einlegen der Kugeln behindern, und im Betrieb der gefertigten Überlastkupplung ein hoher Verschleiß an Kanten der Einbuchtungen, insbesondere, weil nach dem Lösen der kraftschlüssigen Verbindung zwischen den beiden Kupplungskörpern der antriebsseitige Kupplungskörper durch das Antriebsaggregat weiterhin in Rotation versetzt wird.

Um dem abzuhelfen liegt der Erfindung die Aufgabe zugrunde, eine Überlastkupplung der eingangs genannten Gattung so auszubilden, dass die Kupplung leicht montierbar ist und im Betrieb verschleißarm ist und dass ein großer Verschleiß der Kupplung vermieden wird, so dass eine lange Lebensdauer erwartet werden kann.

Diese Aufgabe wird durch die in Anspruch 1 angegebenen Merkmale gelöst.

Ausgehend von einer Überlastkupplung zur Begrenzung eines übertragenen Drehmomentes mit zwei Kupplungskörpern, deren Mittelachsen miteinander fluchten, zum Antrieb einer Arbeitseinheit, insbesondere einer Mahlwerkskaffeemühle, wobei ein erster beiden Kupplungskörper als antriebsseitiger Kupplungskörper über eine angetriebene Welle mit einem Antriebsaggregat verbunden ist, wobei ein zweiter der beiden Kupplungskörper als abtriebsseitiger Kupplungskörper mit der Arbeitseinheit in kraftschlüssiger Verbindung steht, wobei mindestens ein Federelement vorgesehen ist, welches an einem der beiden Kupplungskörper angreift und geeignet ist, eine lösbare kraftschlüssige Verbindung zwischen dem antriebsseitigen Kupplungskörper und dem abtriebsseitigen Kupplungskörper herzustellen, wobei die beiden Kupplungskörper im wesentlichen scheibenförmig sind und einander zugewandte Stirnseiten aufweisen, aus denen zueinander komplementäre wellenförmigen Ausnehmungen und Erhebungen ausgeformt sind, und wobei einer der beiden Kupplungskörper durch Belastung mittels des Federelements auf den anderen der beiden Kupplungskörper axial verschiebbar ist, so dass die wellenförmigen Ausnehmungen und Erhebungen in den einander zugewandten Stirnseiten der beiden Kupplungskörper kraft- und formschlüssig ineinandergreifen, umfasst die erfindungsgemäße Überlastkupplung weiterhin eine Schaltvorrichtung, die geeignet ist, eine Drehung der angetriebenen Welle zu stoppen, mit einem Betätigungselement durch Verschieben des axial verschiebbaren Kupplungskörpers betätigbar ist, wenn bei Überschreiten eines vorgegebenen zu übertragenden Drehmoments der axial verschiebbare Kupplungskörper entgegen der Federbelastung selbsttätig verschoben wird.

Infolge der komplementären wellenförmigen Formelemente, nämlich Ausnehmungen und Erhebungen, auf den einander zugewandten Stirnseiten der scheibenförmigen Kupplungskörper, die durch das Federelement kraft- und formschlüssig ineinandergreifend zusammengedrückt werden, wird im Betriebsfall ein von dem Antriebsaggregat, insbesondere einem Elektromotor, erzeugtes Drehmoment bis zum Erreichen eines vorgegebenen maximal zu übertragenden Drehmoments, dessen Größe von der Dimensionierung der komplementären wellenförmigen Ausnehmungen und Erhebungen sowie der Federkraft abhängt, schlupffrei auf die Arbeitseinheit, insbesondere eine Mahlwerkkaffeemühle, übertragen. Wenn hingegen an der Überlastkupplung ein größeres Drehmoment als das vorgegebene maximale Drehmoment angreift, verschieben sich die wellenförmigen Ausnehmungen und Erhebungen unter Lösen der formschlüssigen Verbindung zwischen den beiden Kupplungskörpern gegenseitig sowohl in Umfangsrichtung als auch in axialer Richtung der Kupplungskörper, wodurch insbesondere durch die axiale Verschiebung das Betätigungselement der Schaltvorrichtung beeinflusst wird, so dass das Betätigungselement mittels der mit ihm in Wirkverbindung stehenden Schaltvorrichtung die Drehung der angetriebenen Welle, insbesondere durch Abschalten eines Antriebsmotors stoppt. Damit wird verhindert, dass der angetriebene der beiden Kupplungskörper auf dem anderen der beiden Kupplungskörper gleitet und sich die Ausnehmungen und Erhebungen auf den einander zugewandten Stirnseiten der beiden Kupplungskörper abnutzen.

Die erfindungsgemäße Überlastkupplung ist leicht herstellbar und montierbar, da die Stirnseiten der Kupplungskörper zum Ausformen der wellenförmigen Ausnehmungen und Erhebungen gut zugänglich sind. Bei der Montage brauchen die beiden Kupplungskörper nur zusammengesteckt zu werden, wonach auf die Antriebswelle das Federelement aufgebracht werden kann, welches den unmittelbar benachbarten Kupplungskörper belastet, so dass dieser auf den anderen der beiden Kupplungskörper axial geschoben wird.

Bevorzugt weist jeder der beiden Kupplungskörper jeweils mindestens zwei wellenförmig verlaufende Ausnehmungen bzw. Erhebungen an seiner Stirnseite in gleichen Umfangsabständen auf, wobei die einander gegenüber angeordneten Ausnehmungen bzw. Erhebungen an den einander zugewandten Stirnseiten komplementär sind. Durch die Ausbildung der mindestens zwei Ausnehmungen bzw. Erhebungen in gleichen Umfangsabständen an den einander zugewandten Stirnseiten der beiden Kupplungskörper wird im Fall einer Überlast, wenn das übertragene Drehmoment einen vorgegebenen maximalen Wert überschreitet und sich die beiden Kupplungskörper an den Erhebungen des einen der beiden Kupplungskörper gegenseitig abstützen, kein Kippmoment auf den axial verschiebbaren Kupplungskörper ausgeübt, das sonst einem einseitig erhöhten Verschleiß fördern könnte. Die wellenförmigen Formelemente sind im einzelnen vom Typ einer wellenförmigen nockenartigen Erhebung, die in die innere Stirnseite des einen der beiden Kupplungskörpers stetig bzw. glatt übergeht, sowie eine komplementäre, d.h. die wellenförmige nockenartige Erhebung im wesentlichen bündig aufnehmende wellenförmige Einbuchtung der inneren Stirnseite des anderen der beiden Kupplungskörper. Als innere Stirnseiten werden diejenigen bezeichnet, die in der montierten Überlastkupplung einander zugewandt sind.

Zur gleichmäßigen Übertragung eines Drehmoments verlaufen Flanken der wellenförmigen Ausnehmungen und Erhebungen radial an den inneren Stirnseiten der beiden Kupplungskörper, so dass die Ausnehmungen und Erhebungen kreissektorförmige Abschnitte der Stirnseiten darstellen.

Für die Funktion der Überlastkupplung als Betätigungselement bzw. Auslösemoment ist es gleichwertig, ob die wellenförmigen nockenartigen Erhebungen auf dem verschiebbaren Kupplungskörper ausgebildet sind oder auf dem nicht verschiebbaren, lediglich zusammen mit einem Abtriebskopplungselement drehbaren Kupplungskörper und dementsprechend umgekehrt die komplementären wellenförmigen Ausnehmungen in dem nur drehbaren Kupplungskörper oder in dem verschiebbaren Kupplungskörper ausgeformt sind.

Bevorzugt kompakt ist nach Anspruch 2 das Federelement eine Druckfeder, die konzentrisch zu den Mittelachsen der Kupplungskörper auf der angetriebenen Welle angeordnet und die Federkraft der Druckfeder so bemessen, dass bei Überschreiten eines vorgegebenen, maximal zu übertragenen Drehmoments der axial verschiebbare Kupplungskörper gegen die Federkraft der Druckfeder soweit verschoben wird, dass eine kraft- und formschlüssige Verbindung der beiden Kupplungskörper aufgehoben wird. Die Druckfeder kann einfach bei der Montage auf die Antriebswelle aufgesteckt werden. Die Bemessung der Federkraft in Relation zu der Formgebung der wellenförmigen Ausnehmungen bzw. Erhebungen, so dass im Überlastfall die kraftschlüssige Verbindung der beiden Kupplungskörper aufgehoben ist, indem die Erhebungen an dem einen Kupplungskörper auf die glatte, ebene Fläche der Stirnseite des anderen Kupplungskörpers gelangen, bewirkt eine praktisch vollständige Unterbrechung der Kraftübertragung, bereits bevor durch die Schaltvorrichtung die Drehung der angetriebenen Welle gestoppt wird. Dies dient zur sicheren Trennung des Antriebsaggregats, insbesondere eines Elektromotors, von dem abtriebsseitigen Kupplungskörper und der mit diesem in Verbindung stehenden Arbeitseinheit, insbesondere Mahlwerkskaffeemühle.

Die nach Anspruch 3 als elektrische Schaltvorrichtung ausgebildete Schaltvorrichtung kann einfach einen Schaltkontakt umfassen, der durch den axial verschiebbaren Kupplungskörper bei dessen Verschiebung entgegen der Federkraft betätigt wird und der im Falle eines Elektromotors als Antriebsaggregat dessen Stromzufuhr unterbricht.

Es ist aber nach Anspruch 4 auch eine Mechanik als Schaltvorrichtung einsetzbar, die bei einer Überlast den antriebsseitigen Kupplungskörper der Überlastkupplung dauerhaft, bis zu einer Rückstellung, von dem Antriebsaggregat trennt, d.h. eine kraftübertragende Verbindung unterbricht.

Ein Ausführungsbeispiel der Erfindung wird im Folgenden anhand einer Zeichnung mit zwei Figuren erläutert, woraus sich weitere vorteilhafte Einzelheiten der erfinderischen Gestaltung ergeben können. Es zeigen:
- Figur 1: eine Seitenansicht auf die Überlastkupplung,
- Figur 2: eine Ansicht auf einen Teil der Überlastkupplung nach Figur 1, nämlich auf eine innere Stirnseite eines antriebsseitigen Kupplungskörpers, und
- Figur 3: eine weitere Einzelheit der Überlastkupplung nach Figur 1, nämlich einen Querschnitt durch die Antriebswelle in der Schnittebene AA in Figur 1.

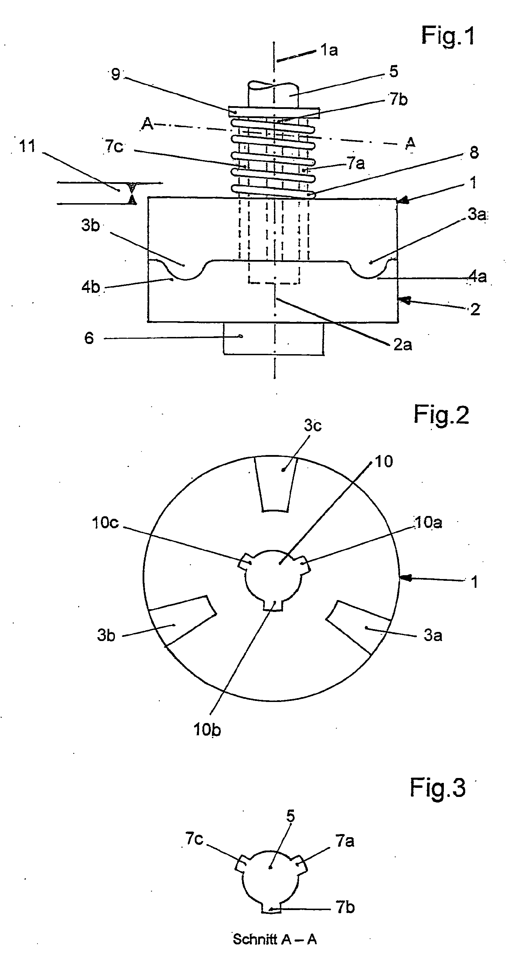

In Figur 1 ist mit 1 ein antriebsseitiger Kupplungskörper einer Überlastkupplung bezeichnet und mit 2 ein abtriebsseitiger Kupplungskörper.

Aus dem antriebsseitigen Kupplungskörper, und zwar aus dessen innerer Stirnseite, siehe auch Figur 2, sind wellenförmige nockenartige Erhebungen 3a bis 3c in gleichmäßigen Umfangsabständen von 120° ausgeformt, die stetig in die Stirnseite übergehen. Die zur Veranschaulichung der Form der nockenartigen Erhebungen in Figur 2 ersichtlichen Begrenzungslinien zeigen, dass nicht bezeichnete Flanken der nockenartigen Erhebungen radial zu dem Mittelpunkt des kreisförmigen Kupplungskörpers verlaufen, so dass kreissektorförmige Abschnitte als wellenförmige nockenartige Erhebungen gebildet werden. Die Höhe der Nocken kann über dem Radius der kreisscheibenförmigen Stirnseite konstant sein, bis zu dem nicht bezeichneten inneren Ende der jeweiligen nockenartigen Erhebung 3a, 3b, 3c.

Der abtriebsseitige Kupplungskörper 2, der ebenfalls kreisscheibenförmig ausgebildet ist, weist auf seiner Stirnseite drei wellenförmige Ausnehmungen auf, von denen zwei, nämlich die Ausnehmungen 4a und 4b in Figur 1 sichtbar sind. Die Abstände der Ausnehmungen in Umfangsrichtung des Kupplungskörpers 2 sind die gleichen wie die Abstände der nockenartigen Erhebungen 3a, 3b, 3c und die Form jeder wellenförmigen Ausnehmung 4a, 4b ist zu derjenigen einer wellenförmigen nockenartigen Erhebung komplementär, so dass die wellenförmigen nockenartigen Erhebungen 3a bis 3c in den wellenförmigen Ausnehmungen formschlüssig anliegend vollständig aufgenommen werden können, wenn die beiden Kupplungskörper 1 uns 2 wie in Figur 1 dargestellt mit ihren inneren Stirnseiten aneinander liegen.

Der antriebsseitige Kupplungskörper 1 steht mit einer Antriebswelle 5 gemäß Figur 1 in axial verschiebbarer, eine Drehung übertragender Verbindung.

Hierzu sind auf dem Außenumfang der Antriebswelle 5 in gleichmäßigen Umfangabständen drei Mitnahmestege 7a, 7b, 7c angeordnet, die einstückig aus der Antriebswelle ausgeformt sein können oder aber als Einzelelemente mit der Antriebswelle 5 fest verbunden sein können.

Zur Aufnahme der Antriebswelle 5 weist der antriebsseitige Kupplungskörper 2 einen zentralen, im wesentlichen zylindrischen Durchgang (10) auf, aus dessen Rand im gleichen Abstand und mit gleicher Querschnittsform wie die Mitnahmestege 7a, 7b, 7c auf der Antriebswelle 5 drei Mitnahmenuten 10a, 10b, 10c ausgeformt sind.

Der abtriebsseitige Kupplungskörper 2 weist ein zentrales, nicht bezeichnetes Sackloch auf, wie aus Figur 1 ersichtlich. In das Sackloch reicht ein Ende der Antriebswelle 5 drehbeweglich hinein. Das Sackloch bildet ein Lager der Antriebswelle.

Wie aus Figur 1 ersichtlich, ist an einer äußeren Stirnseite des abtriebsseitigen Kupplungskörpers 2 ein Abtriebskopplungselement 6 ausgeformt, an welches drehfest eine Arbeitseinheit, insbesondere eine Mahlwerkskaffeemühle, angekoppelt werden kann.

Der abtriebsseitige Kupplungskörper 2 ist - in der Zeichnung teilweise nicht dargestellt - drehbar, aber nicht axial verschiebbar gelagert.

Wie aus Figur 1 ersichtlich, ist eine Druckfeder 8 zwischen einer äußeren Stirnseite des antriebsseitigen Kupplungskörpers 1 und einem Bund 9 angeordnet, der aus der Antriebswelle 5 ausgeformt sein kann oder als einzelnes Element mit der Antriebswelle 5 fest verbunden sein kann.

Bei der Montage der Überlastkupplung wird die Druckfeder 8 auf die Antriebswelle 5 aufgebracht, so dass er einen Abschnitt der Antriebswelle 5 mit Abschnitten der Mitnahmestege 5a, 5b, 5c einschließt, wonach ein dem Bund abgewandtes Ende der Antriebswelle 5 durch den antriebsseitigen Kupplungskörper 1 geschoben werden kann und in den abtriebsseitigen Kupplungskörper 2 eingesteckt werden kann.

Die voranstehend beschriebene Überlastkupplung dient als Betätigungselement für einen Schaltkontakt 11, der als Öffner ausgebildet ist und mit einer Kontaktzunge vor bzw. über der äußeren Stirnseite des antriebsseitigen Kupplungskörpers 1 angeordnet ist, siehe Figur 1.

Im Betrieb der Überlastkupplung wird ein Drehmoment, das von einem Antriebsaggregat, einem Elektromotor, erzeugt wird, von der Antriebswelle 5 über die Mitnahmestege 7a, 7b, 7c und die Mitnahmenuten 10a, 10b, 10c auf den antriebsseitigen Kupplungskörper geleitet und von diesem über die wellenförmigen nockenartigen Erhebungen 3a, 3b, 3c, die in die Ausnehmungen 4a, 4b und eine nicht sichtbare Ausnehmung in dem abtriebsseitigen Kupplungskörper 2 eingreifen, auf diesen übertragen, um über das Antriebskopplungselement 6 an das Antriebsaggregat abgegeben zu werden. Im Überlastfall, wenn ein vorgegebenes, maximal zu übertragendes Drehmoment überschritten wird, bzw. bei Blockierung des Antriebsaggregats werden der antriebsseitige Kupplungskörper 1 und abtriebsseitige Kupplungskörper 2 in Drehrichtung relativ zueinander verschoben, wobei die wellenförmigen nockenartigen Erhebungen 3a, 3b, 3c über die wellenförmigen

Ausnehmungen 4a, 4b und die nicht sichtbare Ausnehmung gleiten. Dadurch werden die wellenförmigen nockenartigen Erhebungen 3a, 3b, 3c verschleißarm aus dem wellenförmigen Ausnehmungen 4a, 4b und die nicht sichtbare Ausnehmung gedrückt, so dass der antriebsseitige Kupplungskörper entgegen der Kraft der Druckfeder 8 auf der Antriebswelle 5 zurückgeschoben bzw. in Figur 1 hochgeschoben wird. Dabei gelangt die äußere Stirnseite des antriebsseitigen Kupplungskörpers 1 an die längere Kontaktzunge des Schaltkontakts 11, der die Stromzufuhr zu dem Antriebsaggregat, dem Elektromotor, unterbricht.

Je nach Dimensionierung der Überlastkupplung können die wellenförmigen nockenartigen Erhebungen 3a, 3b, 3c auf der inneren Stirnseite des antriebsseitigen Kupplungskörpers bis zum vollständigen Stillstand des Antriebsaggregats gleiten; es ist aber auch eine Dimensionierung möglich, dass bereits bei in Umfangsrichtung nur wenig verschobenen wellenförmigen nockenartigen Erhebungen 3a, 3b, 3c, die abschnittsweise in ihren wellenförmigen Ausnehmungen 4a, 4b und der nicht dargestellten Ausnehmung des abtriebsseitigen Kupplungskörpers verbleiben, die Schaltvorrichtung betätigt wird, die das Antriebsaggregat abschaltet. Die kann den Vorteil einer vereinfachten Rückstellung der Kupplungskörper 1, 2 in die in Figur 1 dargestellte Ausgangslage nach Lösen einer Blockierung erbringen.

### Bezugszahlen

- 1: antriebsseitiger Kupplungskörper
- 1 a: Mittellinie
- 2: abtriebsseitiger Kupplungskörper
- 2a: Mittellinie
- 3a: wellenförmige nockenartige Erhebung
- 3b: wellenförmige nockenartige Erhebung
- 3c: wellenförmige nockenartige Erhebung
- 4a: wellenförmige Ausnehmung
- 4b: wellenförmige Ausnehmung
- 5: Antriebswelle
- 6: Abtriebsankopplungselement
- 7a: Mitnahmesteg
- 7b: Mitnahmesteg
- 7c: Mitnahmesteg
- 8: Druckfeder
- 9: Bund
- 10: Durchgang
- 10a: Mitnahmenut
- 10b: Mitnahmenut
- 10c: Mitnahmenut
- 11: Schaltkontakt

## Patentansprüche

1. Überlastkupplung zur Begrenzung eines übertragenen Drehmoments mit zwei Kupplungskörpern (1, 2),deren Mittelachsen miteinander fluchten, zum Antrieb einer Mahlwerkskaffeemühle als Arbeitseinheit, wobei ein erster der beiden Kupplungskörper (1, 2) als antriebsseitiger Kupplungskörper (1) über eine angetriebene Welle (5) mit einem Antriebsaggregat verbunden ist, wobei ein zweiter der beiden Kupplungskörper (1, 2) als abtriebsseitiger Kupplungskörper (2) mit der Arbeitseinheit in kraftschlüssiger Verbindung steht und wobei mindestens ein Federelement (8) vorgesehen ist, welches an einem der beiden Kupplungskörper (1, 2) angreift und geeignet ist, eine lösbare kraftschlüssige Verbindung zwischen dem antriebsseitigen Kupplungskörper (1) und dem abtriebsseitigen Kupplungskörper (2) herzustellen,
wobei die beiden Kupplungskörper (1, 2) im wesentlichen scheibenförmig sind und einander zugewandte Stirnseiten aufweisen, in denen zueinander komplementäre wellenförmige Ausnehmungen (4a, 4b) und Erhebungen (3a, 3b, 3c) ausgeformt sind, und
wobei einer der beiden Kupplungskörper (1, 2) durch Belastung mittels des Federelements (8) auf den anderen der beiden Kupplungskörper axial verschiebbar ist, so dass die wellenförmigen Ausnehmungen (4a, 4b) und Erhebungen (3a, 3b, 3c) in den einander zugewandten Stirnseiten der beiden Kupplungskörper (1, 2) kraft- und formschlüssig ineinandergreifen,
**dadurch gekennzeichnet,**
**dass** eine Schaltvorrichtung, die geeignet ist, eine Drehung der angetriebenen Welle (5) zu stoppen, mit einem Betätigungselement (11) durch Verschieben des axial verschiebbaren Kupplungskörpers betätigbar ist,
wenn bei Überschreiten eines vorgegebenen maximalen zu übertragenden Drehmoments der axial verschiebbare Kupplungskörper (1) entgegen der Federbelastung (5) selbsttätig verschoben wird.

2. Überlastkupplung nach Anspruch 1,
**dadurch gekennzeichnet,**
**dass** das Federelement eine Druckfeder (8) ist, die konzentrisch zu einer der Mittelachsen (1a, 2a), insbesondere auf der angetriebenen Welle (5) angeordnet ist und
**dass** die Federkraft der Druckfeder (8) so bemessen ist, dass bei Überschreiten eines vorgegebenen zu übertragenden Drehmoments der axial verschiebbare Kupplungskörper (1) gegen die Federkraft der Druckfeder (8) soweit verschoben wird, dass eine kraft- und formschlüssige Verbindung der beiden Kupplungskörper (1, 2) aufgehoben wird.

3. Überlastkupplung nach einem der Ansprüche 1 und 2,
**dadurch gekennzeichnet,**
**dass** die Schaltvorrichtung eine elektrische Schaltvorrichtung ist.

4. Überlastkupplung nach einem der vorangehenden Ansprüche,
**dadurch gekennzeichnet,**
**dass** die Schaltvorrichtung eine Mechanik ist, die den antriebsseitigen Kupplungskörper (2) von dem Antriebsaggregat trennt.
